# EUROPÄISCHE PATENTSCHRIFT

(11) **EP 1 291 271 B1**
(45) Veröffentlichungstag und Bekanntmachung des Hinweises auf die Patenterteilung: **08.10.2008**
(21) Anmeldenummer: 02018682.1
(22) Anmeldetag: 21.08.2002
(51) Int. Cl.: B62D 65/06, B62D 25/06

(54) **Montagesystem zum Einbau eines Dachmoduls in eine Fahrzeugkarosserie**
Mounting system for a roof module in a car body
Système d'assemblage d'un module de toit dans une carrosserie de véhicule

(30) Priorität: 05.09.2001 DE 10143379
(43) Veröffentlichungstag der Anmeldung: 12.03.2003
(73) Patentinhaber: Daimler AG, 70327 Stuttgart (DE)
(72) Erfinder: Zirbs, Thomas, 71263 Weil der Stadt (DE)

(56) Entgegenhaltungen:
- DE-A- 19 817 056
- GB-A- 2 312 876
- US-A- 4 538 044
- US-A- 4 909 869

## Beschreibung

Die Erfindung betrifft ein Montagesystem zum Einbau eines Dachmoduls, insbesondere eines Glasdachs, in einen Dachausschnitt einer auf einem Montageband zugeführten Fahrzeugkarosserie.

Aus der DE 40 24 837 A1, der DE 44 28 913 A1 und der DE 195 02 019 C1 ist der Einsatz von Klebetechniken zur Befestigung von Fahrzeugdächern in Fahrzeugkarosserien bekannt. Solche Klebeverbindungen gewährleisten eine hohe Crashfestigkeit, ermöglichen die Kompensation von Toleranzen und stellen sicher, daß der Außenbereich der Karosserie wasserdicht vom Innenraum abgedichtet ist. Aus der DE 40 24 837 A1 ist weiterhin ein Verfahren zum Verkleben eines Schiebedachmoduls mit einer Fahrzeugkarosserie bekannt. Bei diesem Verfahren wird maschinell und automatisiert eine Klebstoffraupe auf den Dachausschnitt der Karosserie aufgetragen. Anschließend wird das Schiebedachmodul auf die Karosserie abgesenkt; durch das Gewicht des Schiebedachmoduls soll die Klebstoffraupe zusammengedrückt und eine prozesssichere Verklebung des Dachmoduls mit der Karosserie erreicht werden.

Allerdings ist das in der DE 40 24 837 A1 beschriebene Verfahren zeitaufwendig, da sich die Karosserie während des Klebstoffauftrags und des anschließenden Einsetzens des Dachmoduls bis hin zum Abbinden des Klebers in Ruhe befinden muß. Weiterhin ist jeder Fehler, der sich beim Auftrag der Klebstoffraupe auf die (bereits fertig lackierte) Karosserie ereignet, mit hohen Folgekosten verbunden: Die betroffene Karosserie muß aus dem Montageband ausgeschleust und aufwendig gereinigt werden.

Aus der US 4 909 869 ist weiterhin System zur Windschutzscheibenmontage bekannt, bei dem die einzusetzende Windschutzscheibe zunächst mit Hilfe eines ersten Roboters randseitig mit einem Klebstoff versehen wird, anschließend gewendet und mit Hilfe eines zweiten Roboters in die Fahrzeugkarosserie eingesetzt wird.

Die GB-A-2312876 beschreibt ein Montagesystem zum Einbau eines Dachmoduls in einen Dachausschnitt einer auf einem Montageband zugeführten Fahrzeugkarosserie. Das Montagesystem umfasst einen Roboter, der mit Hilfe einer Klebedüse eine Klebstoffraupe auf die Innenseite eines Dachmoduls aufbringt und das Dachmodul dann mit Hilfe eines Montagewerkzeugs in den Dachauschnitt (6) einer Karosserie einsetzt. Das Dachmodul wird dabei auf dem Montageband mit der Innenseite nach oben zugeführt und mit Hilfe eines Montagewerkzeugs vom Montageband aufgenommen, gewendet und mit der Innenseite nach unten in den Dachausschnitt eingesetzt. Diese sehr komplexe Handlingsoperation erfordert eine hohe Positioniergenauigkeit und einen hohen Zeitaufwand.

Ist das Dachmodul in den Dachausschnitt der Karosserie eingesetzt, so wird die Klebstoffraupe unter dem Eigengewicht des Dachmoduls zusammengedrückt. Erfahrungsgemäß ist es dabei äußerst schwierig, eine genaue Lage des Dachmoduls gegenüber dem Dachausschnitt zu erreichen.

Der Erfindung liegt die Aufgabe zugrunde, ein herkömmliches Montagesystem zum Einbau eines Dachmoduls in eine Fahrzeugkarosserie in einer solchen Weise zu verbessern, dass eine hohe Lagegenauigkeit des Dachmoduls gegenüber dem Dachausschnitt erreicht wird und gleichzeitig eine Zeitersparnis gegenüber herkömmlichen Montageverfahren erreicht werden kann.

Die Aufgabe wird erfindungsgemäß durch die Merkmale des Anspruchs 1 gelöst.

Danach umfasst das erfindungsgemäße Montagesystem - zusätzlich zu der Einsetzstation, die das mit Klebstoff versehene Dachmodul in den Dachausschnitt der Karosserie einsetzt - eine Handhabungsvorrichtung, die das Dachmodul aus der Klebestation entnimmt, wendet und der Einsetzstation zuführt. In der Klebestation wird die Klebstoffraupe also auf die Innenseite des Dachmodul aufgebracht. Anschließend wird das Dachmodul mit Hilfe der Handhabungsvorrichtung in die Einbaulage (also mit der Innenseite nach unten) gewendet und in diese Lage der Einsetzstation zugeführt. Das mit Klebstoff versehene Dachmodul wird mit Hilfe der erfindungsgemäßen Handhabungsvorrichtung an einen Montageroboter mit einem Montagewerkzeug übergeben, der es lagegenau in den Dachausschnitt einer auf einem Montageband zugeführten Karosserie einsetzt. Zur Steuerung und Überwachung des Montagevorgangs ist ein Steuersystem vorgesehen.

Weiterhin ist das Montagewerkzeug mit Fixierhaken versehen, welche - nachdem das Dachmodul in die Fahrzeugkarosserie eingesetzt wurde - in die Fensterausschnitte der Karosserie eingreifen und das Montagewerkzeug auf eine hochgenau vordefinierte Höhe gegenüber dem Karosseriedach hinunterziehen. Auf diese Weise kann eine reproduzierbare Höhenausrichtung des Dachmoduls gegenüber dem umliegenden Karosseriedach erreicht werden. Die Kraftausübung mit Hilfe der Fixierhaken wird typischerweise mehrere Sekunden lang aufrechterhalten, bis ein erstes Abbinden des Klebstoffs erfolgt und das Dachmodul in dieser Lage fixiert ist. Während bei herkömmlichen Montagesystemen die aufgetragene Klebstoffmenge bzw. der Abstands zwischen den zu verklebenden Bereichen auf Dachmodul und Dachausschnitt hochgenau dimensioniert werden muss, damit das Dachmodul unter seinem Eigengewicht prozesssicher um exakt das gewünschte Maß ein die Fahrzeugkarosserie einsinkt, ist dies beim erfindungsgemäßen Montagesystem nicht mehr notwendig, da das Dachmodul während des Einsetzens in den Dachausschnitt mit einer zusätzlichen Kraft anzugepresst wird.

Durch eine günstige Parallelisierung der Prozeßschritte des Zuführens der Karosserie auf dem Montageband einerseits und des Kleberauftrags auf das Dachmoduls andererseits kann mit dem erfindungsgemäßen Montagesystems eine erhebliche Zeitersparnis gegenüber herkömmlichen Montageverfahren erzielt werden: Im Unterschied zu den bekannten Verfahren braucht sich die Karosserie nämlich bei Verwendung des erfindungsgemäßen Montagesystems nur noch während des Einsetzens des Dachmoduls in Ruhe zu befinden. Der Auftrag der Klebstoffraupe auf das Dachmodul und die Zuführung des mit Klebstoff versehenen Dachmoduls an das Montageband kann dann bereits vor dem Zeitpunkt erfolgen, zu dem die Karosserie vom Montageband an die Einbaustation transportiert wird.

Weiterhin sind bei Verwendung des erfindungsgemäßen Montagesystems Fehler beim Kleberauftrag, z.B. Verschmieren, vorzeitiges Abbinden des Klebers etc., mit wesentlich geringeren Kosten verbunden als bei herkömmlichen Verfahren: Im Falle eines fehlerhaften Kleberauftrags wird nämlich das betroffene Dachmodul ausgesondert; gleichzeitig wird ein neues Dachmodul mit Kleber versehen und in die Karosserie eingesetzt. Dies ist wesentlich weniger aufwendig als das bei herkömmlichen Verfahren notwendige Ausschleusen einer verunreinigten Karosserie aus dem Montageband, Reinigung und erneutem Zuführen auf dem Montageband. Das ausgesonderte Dachmodul wird gereinigt und erneut zugeführt, ohne daß dabei der Montagetakt oder die Montagereihenfolge der Fahrzeugkarosserien beeinflußt wird.

Das erfindungsgemäße Montagesystem ermöglicht eine vollautomatisierte Montage des Dachmoduls auch unter den stark beengten Raumverhältnissen in unmittelbarer Nähe eines Montagebandes. Die Dachmodule werden vorteilhafterweise in Ladungsträgern, welche mehrere Dachmodule fassen, an das Montagesystem angeliefert. In einem ersten Schritt werden sie vereinzelt und mit der Innenseite nach oben in Lehren abgelegt, so daß sie sich bereits in einer für den Klebstoffraupenauftrag günstigen Raumlage befinden. Zur Fixierung der Dachmodule in dieser Raumlage sind die Lehren zweckmäßigerweise mit automatischen Spannelementen (z.B. Saugnäpfen, die an der Außenseite des Dachmoduls angreifen) versehen.

Im folgenden werden weitere bevorzugte Ausführungsformen beschrieben.

Zum Zuführen der in den Lehren abgelegten Dachmodule in die Klebestation umfaßt das Montagesystem eine erste Handhabungsvorrichtung. - Um Verschmutzungen der Fügebereiche auf den Dachmodulen während des Transports und des Handlings zu vermeiden, werden die Fügebereiche vielfach direkt nach Fertigstellung des Dachmoduls mit Schutzklebebändern abgedeckt. Vor Zuführung der Dachmodule in die Klebestation müssen diese Schutzklebebänder entfernt werden, um die Fügebereiche auf den Dachmodulen freizulegen. Hierzu kann eine vollautomatische Abziehvorrichtung zum Einsatz kommen: In diesem Fall sind die Schutzklebebänder zweckmäßigerweise mit abragenden Eingriffsschlaufen versehen; die Abziehvorrichtung erfaßt diese Schlaufen und zieht die Schutzklebebänder ab. Alternativ kann das Abziehen der Schutzklebebänder manuell erfolgen. Aus ergonomischen Gründen sollte in diesem Fall das Dachmodul gekippt werden, um eine leichte Zugänglichkeit der Schutzklebebänder in allen Randbereichen des Dachmoduls zu ermöglichen. Daher ist in diesem Fall eine Schwenkvorrichtung vorgesehen, mit Hilfe derer das auf der Lehre fixierte Dachmodul um näherungsweise 80° um seine Längsachse geschwenkt wird; nach Entfernen der Schutzklebebänder durch einen Werker wird das Dachmodul wieder in seine Ausgangslage zurückgeschwenkt.

Unmittelbar nach Entfernen der Schutzklebebänder wird das auf der Lehre fixierte Dachmodul - mit der Innenseite nach oben - der Klebestation zugeführt, in der Klebstoffraupen auf die Fügebereiche aufgebracht werden. Der Klebstoffauftrag erfolgt mit Hilfe eines Kleberoboters, der mittels einer CNC-Steuerung eine vorprogrammierte Klebebahn abfährt und dabei über eine Klebedüse eine Klebstoffraupe auf die Fügebereiche absetzt. Um ein prozeßsicheres Auftragen der Klebstoffraupe sicherzustellen, wird die Klebedüse mit Hilfe einer Feder auf das Dachmodul gedrückt. Der Spannungszustand der Feder wird kontinuierlich überwacht, so daß ein fehlender Kontakt der Klebedüse gegenüber dem Dach sofort detektiert wird und geeignete Gegenmaßnahmen ergriffen werden können.

Nach Auftrag der Klebstoffraupe wird das Dachmodul mit Hilfe einer weiteren Handhabungsvorrichtung aus der Lehre entnommen und dem Montageroboter zugeführt. Hierzu wird das Dachmodul vorteilhafterweise zunächst um 180° um seine Längsachse gekippt, um es in Einbaulage zu bringen. In dieser Raumlage wird das Dachmodul von dem Montageroboter ergriffen, mit Hilfe dessen das Dachmodul in den Dachausschnitt der Karosserie eingesetzt wird.

Der Einsatz des Dachmoduls in die Karosserie muß mit höchster Präzision erfolgen, um eine hochwertige Anmutung des fertigen Fahrzeugs sicherzustellen. Insbesondere muß das Dachmodul in Querrichtung des Karosserie-Koordinatensystems hochgenau gegenüber dem Dachausschnitt ausgerichtet werden, um beidseitig gleichmäßige Spalte zwischen den Rändern des Dachmoduls und den Dachholmen der Karosserie zu erzeugen, in die in einem späteren Montageschritt mit anclipsbare Zierstäbe eingeführt werden. Um eine solch präzise Positionierung des Dachmoduls in der Karosserie zu gewährleisten, ist es vorteilhaft, das Dachmodul mittels eines Montagewerkzeugs einzubauen, das schwimmend gegenüber dem Montageroboter gelagert ist: Die Bahnbewegung des Montageroboters entspricht einer fest einprogrammierten CNC-Bahn; die schwimmende Lagerung gestattet dann den Ausgleich toleranzbedingter Ungenauigkeiten in den geometrischen Ausmaßen und/oder der Lage des Dachmoduls bzw. der auf dem Montageband zugeführten Karosserie, so daß eine genaue Ausrichtung des Dachmoduls gegenüber der Karosserie erreicht werden kann.

Voraussetzung hierfür ist, daß das Dachmodul auf eine solche Weise im Montagewerkzeug aufgenommen werden kann, daß eine hochgenaue Ausrichtung des Dachmoduls gegenüber dem Montagewerkzeug sichergestellt ist. Hierzu ist das Montagewerkzeug mit (ersten) Zentrierwerkzeugen versehen, durch die eine Zentrierung des Dachmoduls gegenüber dem Montagewerkzeug erreicht wird. Weiterhin ist das Montagewerkzeug mit zusätzlichen (zweiten) Zentrierwerkzeugen versehen, mit Hilfe derer eine lagegenaue Positionierung des Montagewerkzeugs gegenüber dem Dachausschnitt der Fahrzeugkarosserie erreicht wird. Somit wird das Dachmodul in einer definierten Lage gegenüber dem Montagewerkzeug des Montageroboters ergriffen, zur Karosserie transportiert und dort in definierter Lage gegenüber dem Dachausschnitt eingesetzt.

Um - insbesondere bei Serienanlauf oder bei apparativen oder konstruktiven Modifikationen - eine schnelle Qualitätskontrolle der Karosserien in bezug auf Spaltmaße zwischen Dachausschnitt und Dachmodul durchzuführen, empfiehlt es sich, das Montagesystem mit einem Sensorsystem zur Erfassung relevanter Meßgrößen der Karosserie und des Dachmoduls zu versehen. Besonders vorteilhaft ist der Einsatz optischer Sensoren - z.B. Lichtschnittsensoren -, mit deren Hilfe bereits während des Einsetzens des Dachmoduls eine schnelle berührungslose Erfassung und Bewertung der Spaltmaße erfolgen kann; im Falle eines fehlerhaften Einsetzens kann die Lage des Dachmoduls sofort - d.h. vor dem Abbinden des Klebers - mit Hilfe des Montagewerkzeugs nachjustiert werden.

Das Montagesystem eignet sich insbesondere zum Einsatz an Montagebändern, an denen unterschiedliche Fahrzeugvarianten montiert werden, wobei nur ausgewählte Fahrzeuge mit einem im Zuge der Montage einzubauenden Dachmodul versehen werden müssen, während andere Fahrzeuge bereits im Rohbau mit einem (eingeschweißten) Festdach versehen wurden. Um einen reibungslose Montage der unterschiedlichen Varianten sicherzustellen, ist es vorteilhaft, dem Steuersystem des Dachmodul-Montagesystems frühzeitig Informationen darüber zuzuleiten, an welchen Stellen in der Montagesequenz sich Fahrzeugkarosserien befinden, die mit einem Dachmodul versehen werden müssen. Dies ermöglicht einen frühzeitigen Beginn des Klebstoffauftrags auf das einzusetzende Dachmodul parallel zur Zuführung der betreffenden Karosserie auf dem Montageband, so daß die Karosserie gleichzeitig mit dem klebstoffbeschichteten Dachmodul die Montagestation erreicht. Dadurch wird der mit dem Einkleben des Dachmoduls verbundene Zeitbedarf minimiert. Weiterhin wird dabei verhindert, daß der Klebstoff zu früh (oder zur Unzeit) auf die Dachmodule aufgebracht wird, was ein Abbinden des Klebstoffs vor dem Einsatz des Dachmoduls in die Karosserie und somit erhöhten Ausschuß bzw. Nacharbeit zur Folge haben kann.

In einer vorteilhaften Ausgestaltung der Erfindung sind die Karosserien auf dem Montageband mit elektronisch oder optisch auslesbaren mobilen Datenträgern versehen, die Informationen bezüglich der Ausstattung der jeweiligen Fahrzeugkarosserie enthalten. Die Daten dieser mobilen Datenträger werden mit Hilfe eines in einem geeigneten Abstand vor der Dachmodul-Montagestation am Rand des Montagebandes befindlichen Sensors ausgelesen und an das Steuersystem des Montagesystems übermittelt, welches sie in bezug auf eine eventuell notwendigen Einbau eines Glasdachs auswertet. Enthält ein dem Steuersystem zugehender Datensatz die Anforderung, daß ein Dachmodul eingesetzt werden soll, so stößt der Steuerrechner den Klebstoffauftrag und die Zufuhr des Dachmoduls an, so daß das Dachmodul (möglichst) gleichzeitig mit dem Dachmodul an der Montagestation eintrifft.

Im folgenden wird die Erfindung anhand eines in den Zeichnungen dargestellten Ausführungsbeispiels näher erläutert; dabei zeigen:
- Fig. 1: eine Aufsicht auf ein Anlagenlayout eines erfindunggemäßen Montagesystems für Dachmodule;
- Fig. 2: eine Detailansicht einer Innenseite eines Dachmoduls;
- Fig. 3: eine Detailansicht der Klebedüse beim Auftrag einer Klebstoffraupe auf ein Dachmodul;
- Fig. 4a: eine Aufsicht auf ein Montagewerkzeug zum Einsetzen eines Dachmoduls in eine Fahrzeugkarosserie;
- Fig. 4b: eine Schnittansicht des in Fig. 4a dargestellten Montagewerkzeugs gemäß einem Schnitt entlang der Linie IVb - IVb.

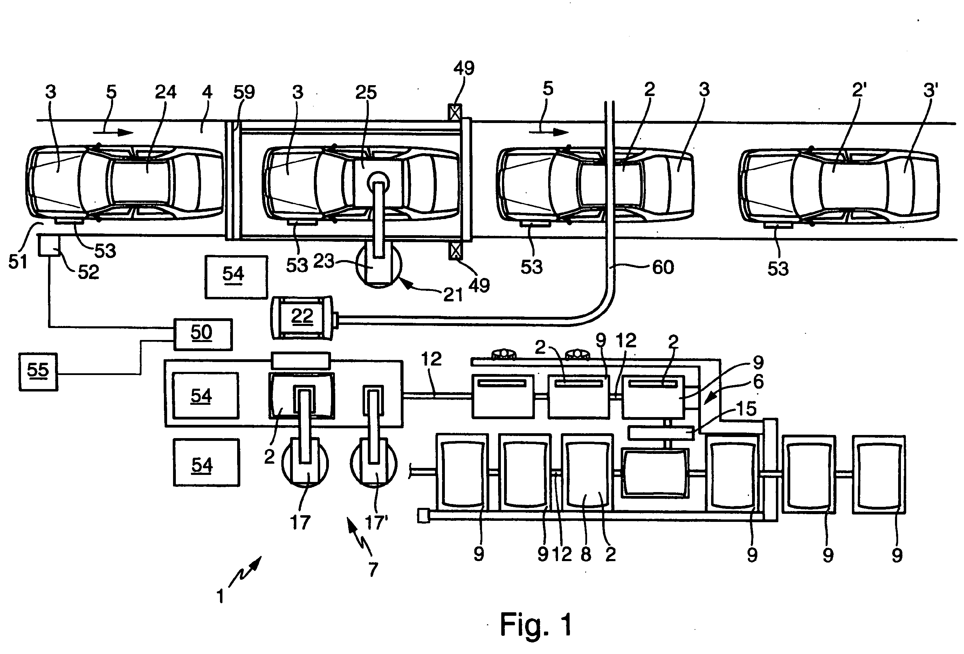

Figur 1 zeigt ein Anlagenlayout eines erfindungsgemäßen Montagesystems 1 zum Einbau von Dachmodulen 2 in Fahrzeugkarosserien 3. Die Fahrzeugkarosserien 3 werden dem Montagesystem 1 auf einem Montageband 4 zugeführt, dessen Bewegungsrichtung in Figur 1 durch einen Pfeil 5 angedeutet ist.

Die Dachmodule 2 werden an das Montagesystem 1 auf (in Figur 1 nicht dargestellten) Ladungsträgern angeliefert, in denen sich jeweils mehrere Dachmodule 2 in Einbaulage übereinandergestapelt befinden. Im Fall komplexer Dachmodule 2 (z.B. Glasschiebedächer) enthält jeder Ladungsträger typischerweise sechs bis zehn Dachmodule 2, die in Einbaulage auf dem Ladungsträger übereinander gelagert sind. Mit Hilfe einer ersten Handhabungsvorrichtung 6 werden die Dachmodule 2 einer Klebestation 7 zugeführt, in der ihre Innenseiten 8 mit Klebstoffraupen 16 versehen werden. Dazu werden in einem ersten Prozeßschritt die Dachmodule 2 aus den Ladungsträgern abgestapelt und einzeln in mobile Lehren 9 eingesetzt. Dieses Entladen kann manuell erfolgen oder mit Hilfe einer (in Figur 1 nicht gezeigten) automatisierten Abstapeleinrichtung durchgeführt werden.

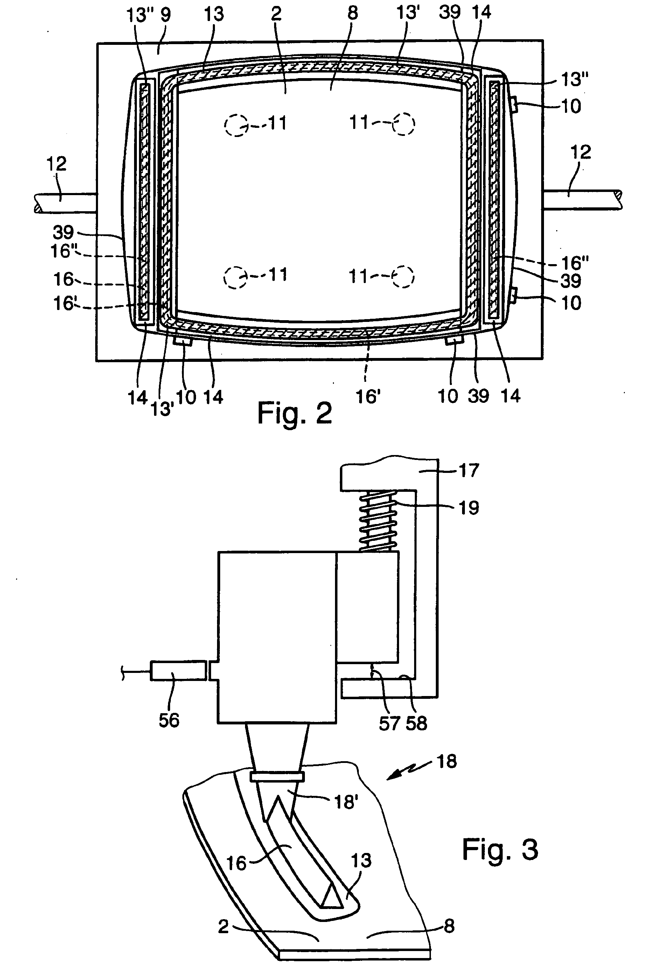

Vorteilhafterweise werden die Dachmodule 2 - falls sie in Einbaulage angeliefert werden - im Zuge der Entnahme aus dem Ladungsträger um 180° um eine ihrer Längsachsen gekippt, so daß sie mit der Innenseite 8 nach oben in den Lehren 9 abgelegt werden. Dies hat den Vorteil, daß sich die Dachmodule 2 dann bereits in einer für den Klebstoffraupenauftrag günstigen Raumlage befinden. Figur 2 zeigt eine Detailansicht der Innenseite 8 eines auf einer Lehre 9 abgelegten Dachmoduls 2. Zur exakten Positionierung des Dachmoduls 2 weist die Lehre Anschläge 10 auf, die in Figur 2 schematisch dargestellt sind. Zur Fixierung der Raumlage des Dachmoduls in der Lehre 9 ist diese weiterhin mit Spannelementen 11 (z.B. Saugnäpfen, die an der Außenseite des Dachmoduls angreifen, oder alternativen, am Rand 39 des Dachmoduls 2 angreifenden Elementen) versehen. Zur Bewegung der Lehren 9 dient eine vollautomatischen Fördereinrichtung 12, mit Hilfe derer bestückte Lehren 9 in einer ausgewählten Reihenfolge einer Klebestation 7 zugeführt werden, in Wartepositionen ein- und ausgeschleust werden und im entladenen Zustand wieder in die Ausgangsposition zurücktransportiert werden, wo sie für die Aufnahme eines neuen Dachmoduls bereitstehen.

Wie in Figur 2 dargestellt ist, weist die Innenseite 8 des Dachmoduls 2 Fügebereiche 13 auf, im Bereich derer Klebstoffraupen aufgetragen werden sollen; diese Fügebereich sind in Figur 2 schraffiert dargestellt. Im vorliegenden Ausführungsbeispiel ist auf dem Dachmodul 2 ein umlaufender Fügebereich 13' vorgesehen; die in diesem Bereich aufzutragende, in Figur 2 strichliert angedeutete Klebstoffraupe 16' fixiert das Dachmodul 2 einerseits im Dachausschnitt 24 und dichtet andererseits das Fahrzeuginnere gegen die Außenwelt ab. Weiterhin ist in Fahrzeugrichtung hinten und vorne je ein weiterer Fügebereich 13" vorgesehen; in diesen Bereichen 13" wird eine in Figur 2 strichliert angedeutete Stütz-Klebstoffraupe 16" aufgetragen, durch welche eine erhöhte Stabilität und Steifigkeit der Gesamtkarosserie 3 erreicht wird. Die Kleberaupen 16',16" können einstückig ausgeführt sein oder aus mehreren Teilstücken bestehen.

Die angelieferten Dachmodule 2 sind in den Fügebereichen 13 mit Schutzklebebändern 14 versehen, welche diese Bereiche 13 während des Transports vor Verschmutzung schützen sollen. Vor dem Auftrag der Klebstoffraupen 16 auf die Dachmodule werden diese Schutzklebebänder 14 manuell entfernt. Hierzu wird das Dachmodul 2 in einer Schwenkstation 15 gemeinsam mit der Lehre 9 näherungsweise 80° um seine Längsachse geschwenkt; hierbei wird die Innenseite 8 des Dachmoduls 2 dem für das Abziehen des Schutzklebebandes 14 zuständigen Werker zugewendet, so daß die Bereiche der Klebebänder 14 für den Werker leicht zugänglich sind. Die Anschläge 10 und/oder die Spannelemente 11 stellen dabei sicher, daß bei diesem Schwenken das Dachmoduls 2 nicht versehentlich aus der Lehre 9 hinausgleitet. Der Werker zieht nun die Schutzklebebänder 14 ab. Danach wird das Dachmodul 2 wieder in seine Ausgangslage zurückgeschwenkt und der Klebestation 7 zugeführt. - Alternativ zu den Schutzklebebändern 14 können die Fügebereiche 13 auch z.B. durch eine flüssig aufgespritzte Schutzschicht (z.B. aus einer PVC-Masse) abgedeckt sein, welche vor dem Klebestoffauftrag (manuell oder maschinell) entfernt werden muß.

In der Klebestation 7 werden auf die Fügebereiche 13 auf der Innenseite 8 des Dachmoduls 2 Klebstoffraupen 16 aufgebracht. Hierzu wird ein (fünf- oder sechsachsiger) Kleberoboter 17 verwendet, der die Klebstoffraupe 16 über eine Klebedüse 18 auf den Fügebereich 13 absetzt (siehe Figur 3). Im Ausführungsbeispiel der Figur 1 ist neben diesem (Haupt-)Kleberoboter 17 noch ein zweiter (Ersatz-)Kleberoboter 17' vorgesehen; dieser Kleberoboter 17' dient als Back-Up, um Ausfälle des Gesamtsystems 1 aufgrund eines Ausfalls des (Haupt-)Kleberoboters 17 zu vermeiden.

Der Kleberoboter 17 fährt eine einprogrammierte CNC-Bahn ab, welche der gewünschten Lage der Klebstoffraupen 16 auf der Innenseite 8 des Dachmoduls 2 entspricht. Die Austrittsöffnung 18' der Klebedüse 18 hat ein Dreiecksprofil und wird mit Hilfe einer Feder 19 auf die Innenseite 8 des Dachmoduls 2 gedrückt.

Diese Feder 19 gewährleistet einen permanenten Kontakt der Klebedüse 18 zum Dachmodul (2 und somit eine einheitliches Profil der Klebstoffraupe 16) und gestattet gleichzeitig die Überwachung des Klebevorgangs: Mit Hilfe eines Sensors 56, der im Beispiel der Figur 3 als induktiver Näherungssensor ausgeführt ist, wird die Vertikalauslenkung 57 der Klebedüse 18 relativ zu einem Anschlag 58 auf dem Kleberoboter 17 kontinuierliche geprüft. Weicht die Vertikalauslenkung 57 von einem vorgegebenen Soll-Wert ab (z.B. aufgrund eines fehlenden Kontakts 18 der Klebedüse 18 gegenüber dem Dachmodul 2), so wird dies vom Sensor 56 sofort detektiert. Zweckmäßigerweise wird in einem solchen Fall ein Warnsignal ausgelöst, so daß geeignete Gegenmaßnahmen (Ersatz der Klebedüse 18, Korrektur der Raumlage des Dachmoduls 2 etc.) ergriffen werden können.

Nach Auftrag der Klebstoffraupe 16 wird das Dachmodul 2 mit Hilfe einer zweiten Handhabungsvorrichtung 20 aus der mobilen Lehre 9 entnommen und einer Einsetzstation 21 zugeführt. Im vorliegenden Aufführungsbeispiel wird das Dachmodul 2 mit Hilfe der Handhabungsvorrichtung 20 um 180° um seine Längsachse gekippt und in Einbaulage in eine Übergabelehre 22 eingesetzt, von wo es dann von einem Montageroboter 23 aufgenommen wird, der das Dachmodul 2 in den Dachausschnitt 24 der Karosserie 3 einsetzt. Die mobile Lehre 9 wird mittels der Fördereinrichtung 12 an die Ausgangsstellung zurücktransportiert und steht dort zur Aufnahme eines weiteren Dachmoduls zur Verfügung.

Der Montageroboter 23 trägt ein Montagewerkzeug 25 zum hochgenauen Ergreifen, Positionieren und Fixieren des Dachmoduls 2 im Dachausschnitt 24 der Karosserie 3. Während der Aufnahme des Dachmoduls 2 aus der Übergabelehre 22 und des Transports des Dachmoduls 2 befindet sich das Montagewerkzeug 25 in einer fixierten Position gegenüber dem Montageroboter 23, welcher eine fest einprogrammierte CNC-Bahn abfährt. Die Übergabelehre 22 des Dachmoduls 2 ist über Rollenauflagen schwimmend gegenüber dem Fabrikboden gelagert, so daß Maßungenauigkeiten des Dachmoduls 2 während des Aufnehmens des Dachmoduls 2 durch das Montagewerkzeug 25 durch Horizontalbewegungen der Übergabelehre 22 ausgeglichen werden können. Zur hochgenauen Aufnahme des Dachmoduls 2 ist das Montagewerkzeug 25 mit Zentrierwerkzeugen 27 versehen, deren Funktion im folgenden beschrieben wird. - Während des Einsetzens des Dachmoduls 2 in die Karosserie 3 wird das Montagewerkzeug 25 schwimmend gegenüber dem Montageroboter 23 gelagert; diese schwimmende Lagerung gestattet eine flexible hochgenaue Positionierung des Montagewerkzeugs 25 gegenüber dem Dachausschnitt 24 mit Hilfe weiterer Zentrierwerkzeuge 27', deren Funktion ebenfalls im folgenden beschrieben wird.

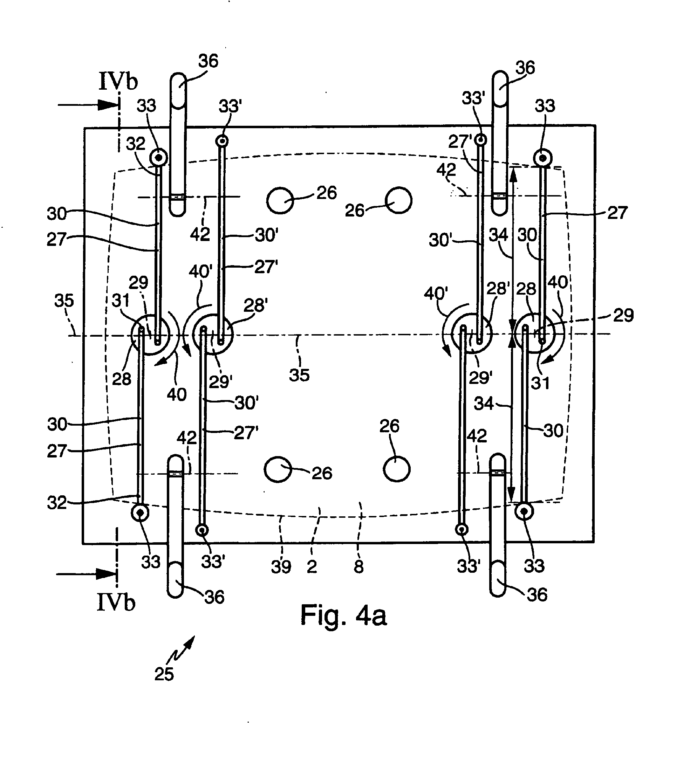

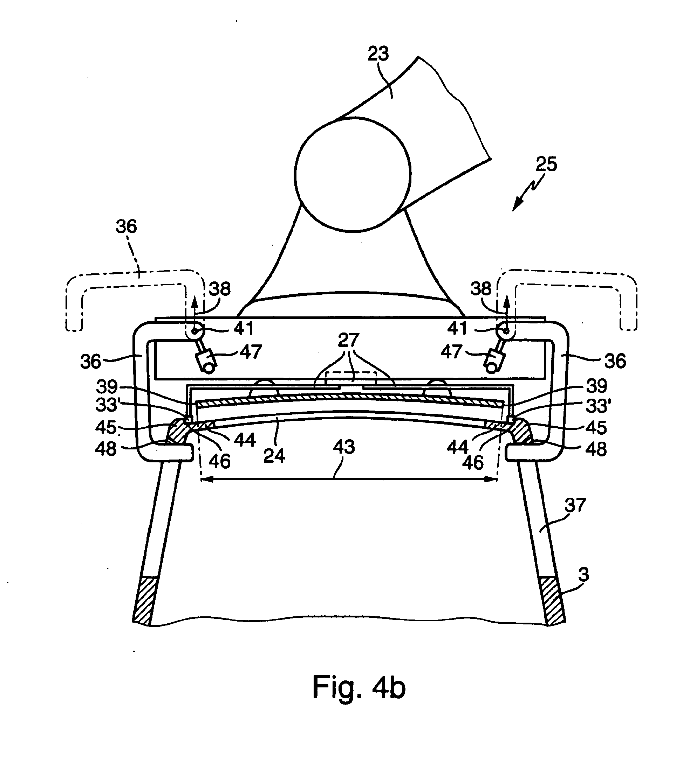

Figur 4a zeigt eine Detailansicht der dem Dachmodul 2 zugewandten Seite des Montagewerkzeugs 25; die äußere Berandung 39 des Dachmoduls 2 ist in dieser Figur als gestrichelte Linie angedeutet. Figur 4b zeigt einen Schnitt in Fahrzeugquerrichtung durch das Montagewerkzeug 25, das Dachmodul 2 und den Dachausschnitt 24 der Fahrzeugkarosserie 3.

Zum Anheben und zum Transport Dachmoduls 2 ist das Montagewerkzeug 25 mit Unterdruck-Saugnäpfen 26 versehen, welche ein gesteuertes Anheben und Abwerfen des Dachmoduls 2 ermöglichen. Weiterhin ist das Montagewerkzeug 25 mit einem (ersten) Paar von Zentrierwerkzeugen 27 versehen, welche - wie unten beschrieben - eine lagegenaue Aufnahme des Dachmoduls 2 in dem Montagewerkzeug 25 ermöglichen: Jedés Zentrierwerkzeug 27 umfaßt ein Drehelement 28, das um einem Drehzentrum 29 drehbar am Montagewerkzeug 25 befestigt ist. An jedem Drehelement 28 sind frei drehbar zwei Arme 30 befestigt, wobei die Anlenkungspunkte 31 der beiden Arme 30 auf dem Drehelement 28 einander diametral gegenüberliegen und den gleichem Abstand zum Drehzentrum 29 haben. An den demm Drehelement 28 entfernten Enden 32 der Arme 30 sind frei drehbar Rollen 33 (oder beliebig geformte, insbesondere der Randkontur 39 des Dachmoduls 2 angepaßte Formstücke) befestigt. Die Länge der beiden Arme 30 jedes Zentrierwerkzeugs 27 und die Radien der beiden Rollen 33 sind so bemessen, daß die Abstände 34 zwischen den dem Drehzentrum 29 nächstliegenden Bereichen der Rollen 33 und dem Drehzentrum 29 auf beiden Armen 30 identisch lang sind. Durch eine gesteuerte Drehung des Dreh-elements 28 können somit die Abstände 34 zwischen den dem Drehzentrum 29 nächstliegenden Bereichen der Rollen 33 und dem Drehzentrum 29 - und somit auch die Abstände der Rollen 33 - gezielt variiert werden.

Außerdem weist das Montagewerkzeug 25 ein weiteres (zweites) Paar von Zentrierwerkzeugen 27' auf, die - wie unten beschrieben - der lagegenauen Positionierung des Montagewerkzeugs 25 gegenüber dem Dachausschnitt 24 der Karosserie 3 dienen. Ihr konstruktiver Aufbau entspricht demjenigen der Zentrierwerkzeuge 27, und ihre Drehzentren 29' befinden sich auf der durch die beiden Drehzentren 29 (des ersten Paars von Zentrierwerkzeugen 27) aufgespannten Achse 35. Dadurch wird sichergestellt, daß die Ausrichtung mittels der ersten Zentrierwerkzeuge 27 und die Ausrichtung mittels der zweiten Zentrierwerkzeuge 27' immer gegenüber derselben Achse 35 erfolgt. Bezüglich Einzelheiten zu Aufbau und Funktionsweise der Zentrierwerkzeuge wird Bezug genommen auf die Anmeldung DE 198 17 056 A1, deren Inhalt hiermit in die vorliegende Anmeldung aufgenommen wird.

Zusätzlich verfügt das Montagewerkzeug 25 über vier Fixierhaken 36, mit Hilfe derer das Dachmodul 2 nach dem Einbau gezielt in den Dachausschnitt 24 der Karosserie 3 hineingedrückt wird, um eine genaue Höheneinstellung und ein prozeßsicheres Verkleben des Dachmoduls 2 im Dachausschnitt 24 zu erreichen. Die Fixierhaken 36 sind über Schwenkgelenke 41 an dem Montagewerkzeug 25 befestigt, wobei die Schwenkachsen 42 näherungsweise parallel zur Fahrzeuglängsachse verlaufen. Während des Ergreifens des Dachmoduls 2 in der Übergabelehre 22, während des Transports zur Fahrzeugkarosserie 3 und während des Positionierens des Dachmoduls 2 im Dachausschnitt 24 sind die Fixierhaken 26 - wie in Figur 4b gestrichelt angedeutet - über das Montagewerkzeug 25 seitlich ausgeschwenkt, um räumliche Beeinträchtigungen zu vermeiden. Jeder Fixierhaken 36 ist gegenüber dem Montagewerkzeug 25 über einen steuerbaren hydraulischen oder pneumatischen Druckzylinder 47 gelagert; mit Hilfe dieser Zylinder 47 können - wie in Figur 4b durch Pfeile 38 angedeutet - die Fixierhaken 36 in Vertikalrichtung gegenüber dem Montagewerkzeug 25 verschoben werden.

Im folgenden werden die Einzelschritte beim Entnehmen des Dachmoduls 2 aus der Übergabelehre 22 und beim anschließenden Einsetzen in die Karosserie 3 beschrieben:
Zunächst wird das Montagewerkzeug 25 auf das in der Übergabelehre 22 abgelegte Dachmodul 2 abgesenkt. Das Montagewerkzeug 25 ist dabei in fester Raumlage (d.h. nicht schwimmend) am Montageroboter 23 befestigt. Die Fixierhaken 36 sind nach oben weggeschwenkt, um Kollisionen zwischen Fixierhaken 36 und Dachmoduls 2 zu vermeiden. Weiterhin ist die Winkellage der Drehelemente 28,28' der Zentrierwerkzeuge 27,27' so eingestellt, daß die Rollen 33,33' seitlich über die Ränder 39 des Dachmoduls 2 hinausragen. Nun werden die beiden Drehelemente 28 der ersten Zentrierwerkzeuge 27 gesteuert in Pfeilrichtung 40 gedreht (Figur 4a), wodurch auf jedem der beiden Zentrierwerkzeuge 27 der Abstand 34 der Rollen 33 zum jeweiligen Drehzentrum 29 verringert wird. Dadurch wird die schwimmend gegenüber dem Fabrikboden gelagerte Übergabelehre 22 (gemeinsam mit dem darauf fixierten Dachmodul 2) gegenüber dem Montagewerkzeug 25 gedreht. Die Drehelemente 28 werden so weit gedreht, bis alle Rollen 33 an den Rändern 39 des Dachmoduls 2 anliegen, so daß keine weitere Drehung möglich ist; das Dachmodul 2 ist dann so gegenüber dem Montagewerkzeug 25 ausgerichtet, daß die Symmetrieachse des Dachmoduls 2 mit der Achse 35 der beiden Drehzentren 29 auf dem Montagewerkzeug 25 zusammenfällt. In dieser Lage werden die Saugnäpfe 26 aktiviert, so daß das Dachmodul 2 nun in dieser Ausrichtung gegenüber dem Montagewerkzeug 25 fixiert ist. Die Zentrierwerkzeuge 27 können dann aus der Ebene des Dachmoduls 2 hinausgeschwenkt werden, um Raumkonflikte während des Einbaus des Dachmoduls 2 in den Dachausschnitt 24 zu vermeiden.

Das an das Montagewerkzeug 25 angesaugte Dachmodul 2 wird nun aus der Übergabelehre 22 herausgehoben und zu der vom Montageband 4 zugeführte Fahrzeugkarosserie 3 transferiert. Während des Einbaus des Dachmoduls 2 wird die Karosserie 3 in einer definierten Position aus dem Montageband 4 ausgehoben, so daß sie sich in einer stationären Lage gegenüber dem Montageroboter 23 befindet. Gegenüber dieser stationären Karosserie 3 wird nun das schwimmend gegenüber dem Montageroboter 23 gelagerte Montagewerkzeug 25 mit dem daran befestigten Dachmodul 2 hochgenau ausgerichtet. Während dieser Ausrichtung wird das Dachmodul 2 - wie in Figur 4b dargestellt - gegenüber der Karosserie 3 in Vertikalrichtung abgehoben, so daß die Klebstoffraupen 16 die ihnen gegenüberliegenden Flansche 44 des Dachausschnitts 24 nicht berühren.

Zur Zentrierung des Montagewerkzeugs 25 (und somit auch des Dachmoduls 2) gegenüber der Karosserie 3 kommen die Zentrierwerkzeuge 27' zum Einsatz: Die Drehelemente 28' dieser Zentrierwerkzeuge 27' befinden sich zunächst in einer Drehposition, bei der die Rollen 33' am Ende der Arme 30' an den Dachrändern 39 anliegen (siehe Figur 4b), so daß die Rollen 33' zwischen die beiden Dachholme 45 der Karosserie 3 eingeführt werden können. Dann werden die beiden Drehelemente 28' gesteuert in Pfeilrichtung 40' gedreht (siehe Figur 4a). Dabei werden die beiden Arme 30' in eine Strecklage überführt und die Rollen 33' (bzw. Formstücke) so weit von dem Drehzentrum 29' abgespreizt, bis alle Rollen 33' an den Innenseiten 46 der Dachholme 45 anliegen. Das Montagewerkzeug 25 mit dem darauf fixierten Dachmodul 2 ist dann in einer solchen Weise zwischen den Dachholmen 45 positioniert, daß die Achse 35 der Drehzentren 29,29' (und somit auch die Symmetrieachse des Dachmoduls 2) genau mittig gegenüber den Dachholmen 45 angeordnet ist.

In dieser Ausrichtung wird das Montagewerkzeug 25 auf die Fahrzeugkarosserie 3 abgesenkt. Die Klebstoffraupen 16 sind dabei so dimensioniert, daß das Dachmodul 2 unter seinem Eigengewicht unvollständig in den Dachausschnitt 24 einsinkt, daß die Ränder 39 des Dachmoduls 2 also in Höhenrichtung (Vertikalrichtung) über die Dachholme 45 hinausragen.

Während im Ausführungsbeispiel der Figuren 4a und 4b das erste Paar Zentrierwerkzeuge 27 (zur Ausrichtung des Montagewerkzeugs 25 gegenüber dem Dachmodul 2) und das zweite Paar Zentrierwerkzeuge 27' (zur Ausrichtung des Montagewerkzeugs 25 gegenüber den Dachholmen 45) als getrennte Komponenten darstellen, können die beiden Funktionen auch in ein einziges Paar von Zentrierwerkzeugen 27" integriert werden. Diese Zentrierwerkzeuge 27" hat denselben Aufbau wie die Zentrierwerkzeuge 27,27'. Zur Ausrichtung des Montagewerkzeugs 25 gegenüber dem Dachmodul 2 werden sie auf Zug belastet (entsprechend der Pfeilrichtung 40 in Figur 4a), während sie zur Ausrichtung des Montagewerkzeugs 25 gegenüber den Dachholmen 45 auf Druck belastet werden (entsprechend der Pfeilrichtung 40' in Figur 4a).

Nach dem Absenken des Dachmoduls 2 auf die Flansche 44 des Dachausschnitts 24 wird in einem nächsten Schritt das Dachmodul 2 nun mit Hilfe des Montagewerkzeugs 25 auf die gewünschte Tiefe in den Dachausschnitt 24 der Karosserie 3 hineingedrückt. Hierzu werden die Fixierhaken 36 um ihre Schwenkachsen 42 in die Fensterausschnitte 37 der Karosserie 3 hinein geschwenkt. Dann werden die Druckzylinder 47 der Fixierhaken 36 mit einem Druck beaufschlagt, so daß die Fixierhaken 36 in Richtung des Montagewerkzeugs 25 gezogen werden und sich zwischen den in die Fensterausschnitte 37 eingreifenden Oberseiten 48 der Fixierhaken 36 und dem Montagewerkzeug 25 Kräfte aufbauen, die das Montagewerkzeug 25 auf die Karosserie 3 hinunterziehen und damit das Dachmodul 2 in den Dachausschnitt 24 der Karosserie 3 hineindrücken.

Die Regelung der durch die Druckzylinder 47 aufgebrachten Kräfte erfolgt mittels Kraftregeler, die gewährleisten, daß das Dachmodul 2 von allen Fixierhaken 36 mit derselben Kraft in den Dachausschnitt 24 hineingedrückt wird. Alternativ können Sensoren vorgesehen sein, die mittels derer die Höhe des Dachmoduls 2 gegenüber der Karosserie 3 erfaßt wird; die Kraft der vier Druckzylinder 47 wird iterativ so lange erhöht, bis die gewünschte Einbauhöhe erreicht ist. In dieser Stellung halten die Fixierhaken 36 das Dachmodul 2 einige Sekunden lang fest, um eine Fixierung dieser Einbaulage sicherzustellen.

Zusätzlich zu den Sensoren, mit deren Hilfe - wie oben erwähnt - die Höhe des eingesetzten Dachmoduls 2 im Vergleich zum Dachausschnitt 24 gemessen werden kann, sind in dem Montagesystem 1 der Figur 1 weitere Sensoren 49 vorgesehen, die einer Überprüfung der korrekten Lage des Dachmoduls 2 im Dachausschnitt 24 dienen; diese Sensoren 49 dienen insbesondere der Messung der Spaltmaße zwischen den Außenrändern 39 des Dachmoduls 2 und den Innenrändern 46 der Dachholme 45. Die Messung erfolgt sofort nach Einsetzen des Dachmoduls 2 in den Dachausschnitt 24. Im Falle eines fehlerhaften Einsetzens kann die Lage des Dachmoduls 2 sofort - d.h. vor dem Abbinden des Klebers - mit Hilfe des Montagewerkzeugs 25 nachjustiert werden. Alternativ können Ungenauigkeiten beim Einsetzen des Dachmoduls 2 manuell korrigiert werden. Als Sensoren 49 kommen optische Lichtschnittsensoren zum Einsatz. Sie ermöglichen eine schnelle berührungsfreie On-Line-Messung; die Meßergebnisse liegen in elektronischer Form vor und können direkt als Regelgröße für eine automatische Lagekorrektur des Dachmoduls 2 verwendet werden.

Nach dem Dacheinbau wird die Fahrzeugkarosserie 3 mit Hilfe des Montagebandes 4 in Pfeilrichtung 5 abgeführt. Zusätzlich zur automatischen Einsetzstation 21 ist eine Hängebahn 60 vorgesehen, mit Hilfe derer mit Klebstoff versehene Dachmodule 2 manuell zum Montageband 4 transportiert und dort manuell in die Karosserie 3 eingefügt werden können.

Die Steuerung des Montagesystems 1 erfolgt mit Hilfe eines Steuersystems 50, das die Einzelschritte der einzelnen Komponenten des Montagesystems 1 steuert und aufeinander abstimmt.

Insbesondere werden mit Hilfe des Steuersystems 50 die Einzelschritte beim Klebstoffauftrags auf die Innenseite 8 des Dachmoduls 2 einerseits und der Zufuhr der Karosserie 3 in die Einsetzstation 21 andererseits zeitlich so koordiniert, daß eine Parallelisierung dieser Prozesse erreicht wird: Durch einen rechtzeitigen Beginn des Klebstoffauftrags kann nämlich sichergestellt werden, daß das mit Klebstoffraupen 16 versehene Dachmodul 2 exakt zu demjenigen Zeitpunkt vom Montagewerkzeug 25 ergriffen und angehoben wird, zu dem die zugehörige Karosserie 3 auf dem Montageband 4 in die Einsetzstation 21 einfährt. Um dies zu erreichen, ist an einer dem Dachmodul-Montagesystem 1 vorgelagerten Stelle 51 des Montagebandes 4 ein Sensor 52 vorgesehen, mit Hilfe dessen das Eintreffen einer Karosserie 3 an dieser Stelle 51 detektiert wird. Ein Meßsignal des Sensors 52 triggert dann den Beginn des Klebstoff-Auftragsprozesses.

Oft besteht das Bedürfnis, neben den Karosserien 3, die im Rahmen der Montage mit einem Dachmodul 2 versehen werden sollen, auf ein und demselben Montageband 4 auch Karosserien 3' zu montieren, in die kein Dachmodul eingebaut werden soll (weil sie z.B. bereits ein Festdach 2' besitzen). In diesem Falle sind die Karosserien 3,3' mit elektronischen Datenträgern 53 versehen, auf denen die Ausstattung der jeweiligen Karosserie 3,3' gespeichert ist. Der am Montageband 4 vorgesehene Sensor 52 ist dann so ausgelegt, daß er die Daten des elektronischen Datenträgers 53 ausliest. Aus diesen Daten wird erkannt, ob in eine Karosserie 3,3', die momentan den Sensor 52 passiert, bereits ein Festdach 2' eingebaut wurde, oder ob ein Dachmodul 2 eingebaut werden soll. Soll ein Dachmodul 2 eingebaut werden, so wird über das Steuersystem 50 der Klebstoffauftrag auf ein Dachmodul 2 und der anschließende Einbau des Dachmoduls 2 in die Karosserie 3 angestoßen. Ist dies nicht der Fall, so unterbleibt die Vorbereitung des Dachmoduls für die betreffende Karosserie 3'. Die Positionierung des Sensors 52 relativ zum Montagesystem 1 richtet sich nach der Geschwindigkeit des Montagebandes 4 und der für die Vorbereitung des einzubauenden Dachmoduls 2 notwendige Vorlaufzeit (für die Zuführung zu Klebestation 7, Klebstoffauftrag und Übergabe an das Montagewerkzeug 25). Zur Überprüfung der Karosserien 3 ist vorteilhafterweise einweiterer Sensor 59 (z.B. eine Lichtschranke) vorgesehen, mit dessen Hilfe abgeprüft wird, ob die jeweils zugeführte Karosserie 3 bereits ein (Einbau-)Dach aufweist; in diesem Fall erhält das Steuersystem 50 einen Impuls, der den Einbau eines (evtl. fälschlicherweise vorbereiteten) Dachmoduls 2 unterdrückt.

Alternativ zur Nutzung des Sensors 52 zur Detektion der Montagereihenfolge kann die Montagereihenfolge auch in einem Produktionsleitsystem 55 abgelegt und von diesem Produktionsleitsystem 55 an das Steuersystem 50 des Montagesystems 1 übertragen werden.

Mittels des Steuersystems 50 wird weiterhin überwacht, daß zwischen dem Beginn des Kleberauftrags auf die Fügebereiche 13 des Dachmoduls 2 und dem Einsetzen dieses Dachmoduls 2 in eine Fahrzeugkarosserie 3 sogenannte "Topfzeit" des Klebstoffs nicht überschritten wird. Die "Topfzeit" hängt u.a. ab von der chemischen Zusammensetzung und der Verarbeitungstemperatur des verwendeten Klebstoffs und beschreibt das Zeitintervall, innerhalb dessen der Klebstoff nach seinem Austritt aus der Klebedüse 18 verbraucht werden muß, um ausreichend gute Klebeigenschaften zu erreichen. Wird an einem bestimmten Dachmodul 2 (z.B. aufgrund eines Stockens des Montagebandes 4 oder wegen eines Ausschleusens einer Fahrzeugkarosserie 3) die "Topfzeit" überschritten, so wird das betreffende Dachmodul 2 ausgesondert; gegebenenfalls wird sofort ein neues Dachmodul 2 vorbereitet, das dann statt des ausgesonderten Dachmoduls 2 in die nächste Karosserie 3 eingeklebt wird. Das ausgesonderte Dachmodul 2 wird zunächst auf einer Hilfsablage 54 abgelegt und kann anschließend gereinigt und wiederverwendet werden.

Mittels des Steuersystems 50 wird kontinuierlich das Zeitintervall seit des letzten Ausstoßes von Klebstoff aus der Klebedüse 18 des Kleberoboters 17 überwacht. Überschreitet diese Zeitspanne einen bestimmten, voreingestellten Maximalwert, so wird eine Klebstoffraupe einer vorgegebene Länge aus der Klebstoffdüse 18 ausgestoßen und sofort entsorgt. Dies ist insbesondere dann wichtig, wenn auf dem Montageband 4 mehrere Varianten von Karosserien 3,3' transportiert werden, von denen nur einige mit einem eingeklebten Dachmodul 2 versehen werden sollen; in diesem Fall kann zwischen zwei aufeinanderfolgenden Moduldach-Anforderungen eine so lange Zeit vergehen, daß der Klebstoff in der Klebedüse 18 aushärtet, was zu einem Verstopfen der Klebedüse 18 und/oder zu einer verminderten Klebstoffqualität führen kann.

Weiterhin wird mit Hilfe des Steuersystems 50 der Pufferbestand an abgestapelten Dachmodulen 2, d.h. die Zahl der mit einem Dachmodul 2 bestückten mobilen Lehren 9, überwacht. Stellt das Steuersystem 50 eine Unterdeckung fest, so wird ein Signal ausgesandt, das den Maschinenführer darauf hinweist, daß weitere Dachmodule 2 nachgeladen werden müssen. Stehen unterschiedliche Dachmodule zur Verfügung, die - je nach zu fertigender Variante - eingebaut werden können, so wird im Vorfeld der Zuführung jeder neuen Karosserie 3 geprüft, ob in einer der mobilen Lehren 9 ein der geforderten Variante entsprechendes Dachmodul 2 bereitsteht; diese Lehre 9 wird dann auf eine solche Weise eingeschleust, daß das betreffende Dachmodul 2 rechtzeitig mit dem Einlaufen der Karosserie 3 in der Einsetzstation 21 bereitgestellt ist.

Wurde bisher nur der Einbau einer einzigen Variante von Dachmodul 2 in die am Montageband 4 vorbeigeführten Karosserien 3 betrachtet, so ist es grundsätzlich möglich, mit dem oben beschriebenen Dachmodul-Montagesystem 1 unterschiedliche Typen und Varianten von Dachmodulen zu verbauen. So kann z.B. in eine erste zugeführte Karosserie 3 ein Glasdach eingesetzt werden, während in eine zweite Karosserie 3 ein Lamellendach gleicher Länge/Breite eingebaut wird und in eine dritte Karosserie 3 ein Festdach gleicher Länge/Breite eingeklebt wird. In diesem Fall stehen in den Lehren 9 unterschiedliche Dachvarianten 2 bereit, die je nach Bedarf durch die erste Handhabungsvorrichtung 6 in die Klebestation 7 transportiert, mit Klebstoff versehen und in der Einsetzstation 21 in die Karosserie 3 eingesetzt werden. Um das jeweils benötigte Dachmodul 2 rechtzeitig vorbereiten zu können, wird mittels des am Montageband 4 befindlichen Sensors 52 die Variante der eintreffenden Karosserie 3 mit dem benötigten Vorlauf erkannt und an das Steuersystem 50 weitergemeldet; das Steuergerät 50 stößt dann die Einschleusung einer mit dem gewünschten Dachtyp bestückten Lehre 9 an, so daß das benötigte Dachmodul 2 echtzeitig an der Klebestation 7 und der Einsetzstation 21 eintrifft.

## Patentansprüche

1. Montagesystem (1) zum Einbau eines Dachmoduls (2), insbesondere eines Glasdachs, in einen Dachausschnitt (24) einer auf einem Montageband (4) zugeführten Fahrzeugkarosserie (3), mit folgenden Komponenten:
- einer Klebestation (7) mit einem Kleberoboter (17,17') zum Aufbringen einer Klebstoffraupe (16,16',16") auf die Innenseite (8) des Dachmoduls (2),
- einer Einsetzstation (21) mit einem Montageroboter (23) zum Einsetzen des mit Klebstoff versehenen Dachmoduls (2) in die Karosserie (3), einer ersten Handhabungsvorrichtung (6) zum Zuführen und Positionieren des Dachmoduls (2) in der Klebestation (7),
- einer zweiten Handhabungsvorrichtung (20) zum Entnehmen des Dachmoduls (2) aus der Klebestation (7) und zum Zuführen in die Einsetzstation (21) und
- einem Steuersystem (50) zur Steuerung des Kleberoboters (17), des Montageroboters (23) und der Handhabungsvorrichtungen (6,20),
wobei der Montageroboter (23) ein Montagewerkzeug (25) zum Ergreifen und Transportieren des Dachmoduls (2) umfasst und das Montagewerkzeug (25) mit Fixierhaken (36) versehen ist, welche während des Andrückens des Dachmoduls (2) in Fensterausschnitte (37) der Karosserie (3) eingreifen.

2. Montagesystem nach Anspruch 1,
**dadurch gekennzeichnet,**
**dass** die erste Handhabungsvorrichtung (6) eine Klebeband-Abzugsvorrichtung zur Entfernung von Schutzklebebändern (14) in den Fügebereichen (13) auf den Dachmodulen (2) aufweist.

3. Montagesystem nach Anspruch 1,
**dadurch gekennzeichnet,**
**dass** die erste Handhabungsvorrichtung (6) eine Schwenkvorrichtung (15) umfasst, mittels derer das Dachmodul (2) um näherungsweise 80° schwenkbar ist.

4. Montagesystem nach einem der vorhergehenden Ansprüche,
**dadurch gekennzeichnet,**
**dass** der Kleberoboter (17) eine Klebedüse (18) mit einer Feder (19) aufweist, wobei die Feder (19) die Klebedüse (18) auf den Fügebereich (13) des Dachmoduls (2) drückt.

5. Montagesystem nach einem der vorhergehenden Ansprüche,
**dadurch gekennzeichnet,**
**dass** das Montagewerkzeug (25) schwimmend gegenüber dem Montageroboter (23) gelagert ist.

6. Montagesystem nach einem der vorhergehenden Ansprüche,
**dadurch gekennzeichnet**,
das das Montagewerkzeug (25) Zentrierwerkzeuge (27,27") zur lagegenauen Aufnahme des Dachmoduls (2) umfasst.

7. Montagesystem nach einem der vorhergehenden Ansprüche,
**dadurch gekennzeichnet,**
**dass** das Montagewerkzeug (25) Zentrierwerkzeuge (27',27") zur lagegenauen Positionierung gegenüber dem Dachausschnitt (24) der Karosserie (3) umfasst.

8. Montagesystem nach einem der vorhergehenden Ansprüche,
**dadurch gekennzeichnet,**
**dass** das Montagesystem (1) einen optischen Sensor (49) zur Messung der Einbaulage des Dachmoduls (2) in die Karosserie (3) umfasst.

9. Montagesystem nach einem der vorhergehenden Ansprüche,
**dadurch gekennzeichnet,**
**dass** das Steuersystem (50) des Montagesystems (1) an ein Produktionsleitsystem (55) gekoppelt ist und von diesem Informationen bezüglich der Sequenz der Fahrzeugkarosserien (3) auf dem Montageband (4) erhält.

10. Montagesystem nach einem der Ansprüche 1 bis 8,
**dadurch gekennzeichnet,**
**dass** das Steuersystem (50) des Montagesystems (1) an einen Sensor (52) am Montageband (4) gekoppelt ist, von welchem das Steuersystem (50) Informationen bezüglich der Sequenz der Fahrzeugkarosserien (3) auf dem Montageband (4) erhält.

## Claims

1. Assembly system (1) for installing a roof module (2), especially a glass roof, in a roof opening (24) of a vehicle body (3) delivered on an assembly line (4), comprising the following components:
- an adhesive bonding station (7) comprising a bonding robot (17, 17') for applying a cylindrical dose of adhesive (16, 16', 16") to the inside (8) of the roof module (2);
- an insertion station (21) comprising an assembly robot (23) for inserting the roof module (2) provided with adhesive into the body (3); a first handling device (6) for supplying the roof module (2) to the adhesive bonding station (7) and positioning it therein;
- a second handling device (20) for removing the roof module (2) from the adhesive bonding station (7) and supplying it to the insertion station (21) and
- a control system (50) for controlling the bonding robot (17), the assembly robot (23) and the handling devices (6, 20),
the assembly robot (23) comprising an assembly tool (25) for gripping and transferring the roof module (2) and the assembly tool (25) being provided with fixing hooks (36) which engage into, window openings (37) of the body (3) while the roof module (2) is under contact pressure.

2. Assembly system according to Claim 1, **characterized in that** the first handling device (6) possesses an adhesive tape stripping device for removing protective adhesive tapes (14) in the joint regions (13) of the roof modules (2).

3. Assembly system according to Claim 1, **characterized in that** the first handling device (6) comprises a pivot device (15) by means of which the roof module (2) can be pivoted through approximately 80°.

4. Assembly system according to one of the preceding claims, **characterized in that** the bonding robot (17) possesses an adhesive nozzle (18) having a spring (19), the spring (19) pressing the adhesive nozzle (18) onto the joint region (13) of the roof module (2).

5. Assembly system according to one of the preceding claims, **characterized in that** the assembly tool (25) is mounted to float relative to the assembly robot (23).

6. Assembly system according to one of the preceding claims, **characterized in that** the assembly tool (25) comprises centring tools (27, 27") to receive the roof module (2) with accurate positioning.

7. Assembly system according to one of the preceding claims, **characterized in that** the assembly tool (25) comprises centring tools (27, 27") for accurate positioning relative to the roof opening (24) of the body (3).

8. Assembly system according to one of the preceding claims, **characterized in that** the assembly system (1) comprises an optical sensor (49) for measuring the installed position of the roof module (2) in the body (3).

9. Assembly system according to one of the preceding claims, **characterized in that** the control system (50) of the assembly system (1) is linked to a production control system (55) and receives information therefrom relating to the sequence of vehicle bodies (3) on the assembly line (4).

10. Assembly system according to one of Claims 1 to 8, **characterized in that** the control system (50) of the assembly system (1) is linked to a sensor (52) on the assembly line (4) from which the control system (50) receives information relating to the sequence of vehicle bodies (3) on the assembly line (4).

## Revendications

1. Système de montage (1) pour l'assemblage d'un module de toit (2), en particulier d'un toit en verre, dans une portion de toit (24) d'une carrosserie de véhicule (3) acheminée sur une chaîne de montage (4), comprenant les composants suivantes :
- un poste de collage (7) avec un robot de collage (17, 17') pour le montage d'un boudin de colle (16, 16', 16") sur le côté intérieur (8) du module de toit (2),
- un poste d'insertion (21) avec un robot de montage (23) pour l'insertion du module de toit (2) pourvu de colle dans la carrosserie (3), un premier dispositif de manipulation (6) pour l'acheminement et le positionnement du module de toit (2) dans le poste de collage (7),
- un deuxième dispositif de manipulation (20) pour enlever le module de toit (2) du poste de collage (7) et pour l'acheminer au poste d'insertion (21) et
- un système de commande (50) pour commander le robot de collage (17), le robot de montage (23) et les dispositifs de manipulation (6, 20),
le robot de montage (23) comprenant un outil de montage (25) pour saisir et transporter le module de toit (2) et l'outil de montage (25) étant pourvu de crochets de fixation (36), lesquels viennent en prise pendant la pression du module de toit (2) dans les sections de fenêtre (37) de la carrosserie (3).

2. Système de montage selon la revendication 1,
**caractérisé en ce que**
le premier dispositif de manipulation (6) présente un dispositif de traction de bande adhésive pour enlever les bandes adhésives de protection (14) dans les régions des joints (13) sur les modules de toit (2).

3. Système de montage selon la revendication 1,
**caractérisé en ce que**
le premier dispositif de manipulation (6) comprend un dispositif de pivotement (15) au moyen duquel le module de toit (2) peut pivoter d'environ 80°.

4. Système de montage selon l'une quelconque des revendications précédentes,
**caractérisé en ce que**
le robot de collage (17) présente une buse de collage (18) avec un ressort (19), le ressort (19) pressant la buse de collage (18) sur la région de joint (13) du module de toit (2).

5. Système de montage selon l'une quelconque des revendications précédentes,
**caractérisé en ce que**
l'outil de montage (25) est monté de manière flottante par rapport au robot de montage (23).

6. Système de montage selon l'une quelconque des revendications précédentes,
**caractérisé en ce que**
l'outil de montage (25) comprend des outils de centrage (27', 27'') pour recevoir correctement le module de toit (2).

7. Système de montage selon l'une quelconque des revendications précédentes,
**caractérisé en ce que**
l'outil de montage (25) comprend des outils de centrage (27', 27") pour le positionnement correct par rapport à la section de toit (24) de la carrosserie (3).

8. Système de montage selon l'une quelconque des revendications précédentes,
**caractérisé en ce que**
le système de montage (1) comprend un capteur optique (49) pour mesurer la position d'assemblage du module de toit (2) dans la carrosserie (3).

9. Système de montage selon l'une quelconque des revendications précédentes,
**caractérisé en ce que**
le système de commande (50) du système de montage (1) est accouplé à un système de conduite de la production (55) et obtient de ce dernier des informations concernant la séquence des carrosseries de véhicule (3) sur une chaîne de montage (4).

10. Système de montage selon l'une quelconque des revendications 1 à 8,
**caractérisé en ce que**
le système de commande (50) du système de montage (1) est accouplé à un capteur (52) sur la chaîne de montage (4), duquel le système de commande (50) obtient des informations concernant la séquence des carrosseries du véhicule (3) sur la chaîne de montage (4).
